# FASCICULE DE BREVET EUROPEEN

(11) **EP 3 625 037 B1**
(45) Date de publication et mention de la délivrance du brevet: **09.08.2023**
(21) Numéro de dépôt: 18723553.6
(22) Date de dépôt: 17.05.2018
(51) Int. Cl.: B29C 70/30, B29C 35/02, B29C 33/02, B29C 41/22, B29C 37/00, B29C 31/04

(54) **PROCÉDÉ DE PRÉPARATION DE PIÈCE COMPOSITE TEXTILE/RÉSINE**
VERFAHREN ZUR HERSTELLUNG EINES TEXTIL-/HARZVERBUNDTEILS
METHOD FOR PREPARING A TEXTILE/RESIN COMPOSITE PART

(30) Priorité: 17.05.2017 FR 1754328; 24.11.2017 FR 1761162
(43) Date de publication de la demande: 25.03.2020
(73) Titulaire: Ivy Group Holding, 51100 Reims (FR)
(72) Inventeur: EL FOUZARI, Mustapha, 51100 Reims (FR); AMOUROUX, Nicolas, 51100 Reims (FR)
(74) Mandataire: Lavoix
(86) Numéro de dépôt international: PCT/EP2018/062896
(87) Numéro de publication internationale: WO 2018/211009

(56) Documents cités:
- EP-A1- 3 098 047
- CA-A1- 2 755 330
- DE-A1-102014 203 543
- DE-A1-102014 203 543
- GB-A- 2 322 597
- JP-A- H04 108 152
- JP-A- H11 235 753
- JP-B2- 5 362 596
- JP-B2- 5 362 596
- US-A1- 2011 049 097
- US-A1- 2012 156 445

## Description

La présente invention concerne un procédé de préparation de pièce composite textile/résine thermoplastique (appelée également toile enduite) et plus particulièrement de telles pièces composites présentant des reliefs, notamment des reliefs positifs et négatifs (embossage/débossage). Un tel procédé est connu du DE 10 2014 203543.

En général, les toiles enduites sont obtenues selon un procédé comprenant :
- L'enduction sur papier d'une résine thermoplastique ;
- Le passage au four du produit obtenu ;
- Le dépôt par enduction d'une composition de colle (notamment base vinylique, polyuréthane, etc) ;
- Le dépôt sur la colle d'un support textile ;
- Le passage au four du produit obtenu ;
- La récupération d'un textile enduit lisse.

Pour donner une texture de surface au textile obtenu, il est généralement connu de modifier le textile enduit après sa fabrication. Notamment, le textile enduit peut être verni (à l'aide d'un vernis vinylique, acrylique, polyuréthane, etc) à l'aide d'un cylindre (sur la base du principe de l'héliogravure) puis le composite obtenu est grainé ou gaufré à l'aide de plaque de pressage ou d'un cylindre graveur. Cela permet de donner au tissu enduit un aspect imitation cuir, de faire apparaître un logo, un motif, un monogramme. Cependant, ce procédé ne permet pas d'obtenir avec une grande définition des motifs gravés positivement et négativement sur une même toile. Il ne permet pas non plus d'obtenir une profondeur de gravure suffisante et limite donc la géométrie des motifs. Ce procédé ne permet pas non plus d'obtenir un textile composite avec une impression placée sur les motifs gravés.

Il y a donc un intérêt à fournir un procédé permettant d'obtenir des pièces composites textile/résine thermoplastique ou thermodurcissable présentant des motifs positifs et négatifs et pouvant optionnellement présenter une impression placée sur les motifs gravés.

Un objectif de la présente demande est de fournir un procédé permettant d'obtenir des pièces composites textile/résine thermoplastique présentant des motifs positifs et négatifs. Un autre objectif de la présente demande est de fournir un tel procédé permettant d'obtenir une importante profondeur de gravure.

Un autre objectif encore de la présente invention est de fournir un tel procédé permettant une grande variabilité de géométrie des motifs.

Un objectif encore de la présente invention est également de fournir un tel procédé permettant une impression (coloration) placée sur le(s) motif(s) gravé(s).

D'autres objectifs apparaîtront à la lecture de la description de l'invention qui suit.

Ces objectifs sont remplis par la présente demande qui concerne un procédé de fabrication tel que défini aux revendications.

Selon la nature de la première composition (A) il peut être nécessaire de chauffer le moule avant application de la composition (A).

L'étape c) correspond à une post-gélification permettant l'application du textile. La température du chauffage peut être déterminée par l'homme du métier et dépend de la composition déposée avant le dépôt du textile. Après le dépôt de la composition (A) un chauffage jusqu'à gélification de la composition (A), soit un chauffage pour atteindre une température du moule comprise entre 70 et 300°C, de préférence entre 100 et 260°C, est réalisé avant le dépôt du textile.

Le procédé de l'invention comprend, une étape a1), après l'étape b), ou après l'étape a0), de dépôt sur toute ou partie de la surface du moule d'une composition (B) colorée comprenant au moins une résine thermoplastique ou thermodurcissable. Ainsi, lorsque l'étape b) comporte l'application de plusieurs compositions (A), la composition (B) peut être appliquée entre au moins deux compositions (A).

L'étape c) qui a lieu après le dépôt de la seconde composition (B) correspond à une étape de post-gélification permettant l'application du textile. La température du chauffage peut être déterminée par l'homme du métier et dépend de la composition déposée avant le dépôt du textile. Après le dépôt de la composition (B) un chauffage jusqu'à gélification de la composition (B), soit un chauffage pour atteindre une température du moule comprise entre 70 et 300°C, de préférence entre 100 et 260°C, est effectué.

Dans ces modes de réalisation, le moule est chauffé à la fin de l'étape a0) avant le dépôt de la composition (B).

Selon la nature de la première composition (A) il peut être nécessaire de chauffer le moule avant application de la composition (A), par exemple à une température de 20 à 360°C.

Selon la nature de la composition (A) il peut être nécessaire de chauffer le moule avant application de la composition (B), par exemple à une température de 20 à 100°C, de préférence de 50 à 100°C.

### Composition (A0) :

De préférence, la composition de vernis (A0) comprend, en poids par rapport au poids de la composition :
- 5 à 20%, de préférence 10 à 15%, d'au moins une résine thermoplastique ou thermodurcissable dont les particules ont une taille comprise entre 0,1 et 10 µm, de préférence entre 0,1 et 5 µm;
- 5 à 20%, de préférence 10 à 15%, d'au moins un plastifiant, et
- 65 à 90%, de préférence 70 à 90%, d'au moins un solvant organique ou d'eau.

La composition (A0) peut être déposée sur tout ou partie du moule.

De façon particulièrement avantageuse, cette composition (A0) peut être projetée à travers des buses d'impression de faible diamètre, et par exemple d'un diamètre de 40 µm, et même d'un diamètre de 30 µm ou 20 µm. Cette composition (A0) peut également être déposée par pulvérisation notamment à l'aide d'un pistolet.

La résine peut être une résine thermodure, ou « thermodurcissable », et en particulier parmi les résines thermodurcissables on préfère celles comprenant des motifs époxy, isocyanate ou acide, qui conduisent à l'obtention de réseaux thermodurs de type époxy, polyuréthane, ou polyester. De préférence, la résine est une résine thermoplastique. Dans ce cas, le ratio en poids de la résine thermoplastique au plastifiant est compris entre 1:0,1 et 1:2, et de préférence compris entre 1:0,5 et 1:1. Ce ratio permet d'obtenir une résine particulièrement résistante à l'abrasion. La ou les résines thermoplastiques peuvent être choisies parmi le polychlorure de vinyle, le polychlorure de vinyle chloré (CPVC), les copolymères de chlorure de vinyle par exemple les copolymères de chlorure de vinyle et d'acétate de vinyle, et le polyfluorure de vinylidène, les polyamides tels que le polyamide 11 et le polyamide 12, le polyéthylène haute densité et le polyméthacylate de méthyle. Avantageusement, on choisit le polychlorure de vinyle et le polyméthacrylate de méthyle et les copolymères de chlorure de vinyle et d'acétate de vinyle. De préférence, la résine thermoplastique est une résine polychlorure de vinyle (ou PVC) pouvant être obtenue par un procédé en émulsion, en suspension ou en microsuspension. On peut citer à titre d'exemple la résine commercialisée sous la dénomination Pevikon^{®} P1510 par la société INEOS. La résine de la composition (A0) peut également être une résine polyuréthane mono- ou bicomposant, des vernis base UV ou un latex.

La composition de vernis (A0) est notamment une composition de copolymère vinylique et acrylique, de polymère vinylique, de polymère acrylique ou de polyuréthane mono- ou bicomposant.

De préférence, la composition (A0) est une composition de polymère acrylique.

Le plastifiant mis en oeuvre dans la composition objet de l'invention est un plastifiant compatible avec la résine. Le plastifiant peut être choisi parmi les esters formés à partir d'alcool et d'acide organique tel que l'acide trimellitique, l'acide sébacique, adipique, phtalique, citrique, benzoïque, tallique, glutarique, fumarique, maléique, oléique, palmitique et acétique. Notamment le plastifiant peut être choisi parmi le trimellitate d'octyle, le dioctyl phtalate, le nonyl undecyl phtalate, le dioctyl adipate, le phosphate de tricresyle, le triméthyl pentanyl diisobutyrate, et leurs mélanges. Le plus souvent, on utilise les phtalates et les trimellitates en particulier le trimellitate d'octyle. On peut citer à titre d'exemple les produits commercialisés par la société POLYNT sous les dénominations Diplast^{®} TM/ST, et Diplast^{®} TM79 les produits commercialisés par la société ADEKA PALMAROLE, sous la dénomination CIZER^{®} C8L, et les produits commercialisés par la société EASTMAN sous la dénomination TXIB^{®}. Des mélanges de ces produits peuvent être utilisés en tant que plastifiant.

Le solvant organique mis en oeuvre dans la composition (A0) peut être un solvant dont la température d'ébullition est de préférence au moins égale à 200°C. L'utilisation d'un tel solvant permet d'éviter une vaporisation trop rapide au moment de l'application de la composition sur une pièce moulée, et d'éviter ainsi que des opérateurs ne soient en contact avec des composés organiques volatils. De préférence, le solvant organique est choisi parmi l'isophorone, l'acétate de pentyle, les lactate d'alkyle, en particulier le lactate d'éthyle, les esters dibasiques des acides adipique, glutarique et succinique, et leurs mélanges, en particulier les mélanges d'adipate de diméthyle, de glutarate de diméthyle et de succinate de diméthyle. A titre d'exemple de solvant on peut citer le produit commercialisé par la société EXXONMOBIL sous la dénomination commerciale EXXSOL D140^{®}.

Afin de faire varier la viscosité de la composition (A0) dans les plages définies ci-dessus, un additif de rhéologie peut être ajouté. En particulier, il peut être nécessaire d'abaisser la viscosité de la composition (A0) en utilisant un abaisseur de viscosité. Il peut s'agir d'un diluant volatile, d'un émulsifiant ou d'un colloïde protecteur. Les diluants peuvent en particulier inclure des hydrocarbures à faible point d'ébullition tels que les hydrocarbures en C10-C16. Les émulsifiants incluent des sels ou esters d'acides gras, des condensats d'oxyde d'éthylène avec des phényls alkyles, ou des alcools gras, de l'octoate de zinc/magnésium. Les colloïdes protecteurs sont par exemple les lécithines. La quantité d'additif de rhéologie ajoutée dans la composition (A0) est en général de 5 à 100 parties en poids, pour 100 parties en poids de résine. A titre d'exemple d'additif de rhéologie, on peut citer les esters d'acides carboxyliques commercialisés sous la dénomination commerciale VISCOBYK 5100^{®} par la société BYK CHEMIE GmbH.

La composition (A0) peut comprendre en outre un ou plusieurs additifs, choisis parmi des charges, des stabilisants, des antioxydants, des additifs de mise en oeuvre, des lubrifiants ou des agents ignifugeants. En particulier, parmi les additifs communément utilisés dans des compositions à base de résine vinylique, on peut citer des sels métalliques d'acide carboxylique organique, des acides phosphorique organique, des zéolites, des hydrotalcites, des composés époxidés, des béta-dicétones , des alcools polyhydriques, des antioxydants phosphorés, soufrés ou phénolique, des absorbeurs ultraviolet par exemple des benzophenones, benzotriazoles, et dérivés d'oxanilide, des cyanoacrylates, des stabilisants lumière à aminé encombrées ou « HALS » pour « hindered aminé light stabilizer », des stabilisants à alcoxyamine encombrée ou « NOR HALS » pour « Alkoxyamine hindered aminé light stabilizer », notamment les produits commercialisés par Clariant sous la dénomination Hostavin Now^{®}, des sels d'acide perchlorique, et d'autres composés inorganiques à base de métaux, des lubrifiants par exemple des cires organiques, des alcools gras, des acides gras, des esters, des sels métalliques, des charges par exemple de la craie ou du talc, des agents d'expansion par exemple des azodicarbonamides.

### Composition A :

La composition (A) comprend au moins une résine thermoplastique de préférence choisie parmi le polychlorure de vinyle (PVC) ou un mélange de PVC et d'un polymère compatible choisi parmi les copolymères ou terpolymères chlorure de vinyle et acétate de vinyle (VC/VA) ou chlorure de vinyle et dérivé acrylique (VC/DA), les copolymères PVC/nitrile, les polyuréthanes mono- ou bi-composant, notamment les polyuréthanes thermoplastiques (TPU), les polyétheresters thermoplastiques, les copolymères éthylène/monomère vinyilique (EVA), les terpolymères éthylène/ monomère vinylique/carbonyle, les élastomères acryliques processables à l'état fondu, les copolymères à blocs polyamide et à blocs polyéther ou polyétherblockamides, les polyéthylènes chlorés ou chlorosulfonés, les polymères éthylène/ (méth) acrylate d'alkyle ou acide (méth) acrylique fonctionnalisés ou non, les polymères core-shell type MBS, les terpolymères bloc SBM, le PVDF et les résines polyamides.

La composition (A) peut en outre comprendre un ou plusieurs stabilisants. En effet, sous l'effet de la chaleur, de l'oxygène et/ou des UV, la résine thermoplastique, notamment PVC, a tendance à se dégrader. La composition (A1) peut donc comprendre :
- Un ou plusieurs stabilisant thermique par exemple choisi parmi les sels métalliques, par exemple sels de métaux alcalins ou alcalino-terreux ou métaux de transition, par exemple sels de calcium, sels de baryum ou sels de zinc ; et/ou les complexes à base d'aluminium, de potassium ou de sodium ; et/ou
- Un ou plusieurs stabilisant anti-UV choisis parmi les benzotriazoles et les cyanoacrylates.

La composition (A) selon l'invention peut en outre comprendre des charges. De manière générale, les charges sont des substances inertes, généralement minérales, permettant de modifier certaines propriétés par exemple mécanique, électrique, thermique, etc. Les charges sont notamment choisies parmi les carbonates de calcium (naturels ou précipités), les kaolins calcinés, le talc, les dolomies, le sulfate de baryum, les oxydes métalliques.

La composition (A) selon l'invention peut comprendre également au moins un pigment. Les pigments sont notamment choisis parmi :
- Les colorants organiques de type azoïque, anthraquinonique ;
- Les pigments minéraux, notamment choisis parmi les oxydes de titane, les oxydes de fer, les oxydes de chrome, les oxydes de manganèse, les oxydes de cobalt ;
- Les composés organométalliques par exemple les phtalocyanine de cuivre ;
- Les noirs de carbone ;
- Les pigments métallisés, par exemple pigment aluminium, pigment interférentiel.

La composition (A) peut en outre comprendre d'autres additifs tels que des composés antistatiques, des fongicides, des gonflants, des améliorants de la gélification, etc.

Dans un mode de réalisation, la composition (A) est une composition (A1).

Dans un autre mode de réalisation, la composition (A) est une composition (A2).

### Composition A1 :

La composition (A1) comprend au moins une résine thermoplastique telle que celle décrite pour la composition (A), de préférence PVC ou polyuréthane mono ou bicomposant ou copolymère PVC/nitrile, de préférence PVC. De préférence, la composition (A1) est sous forme liquide. De préférence, la résine thermoplastique est obtenue par un procédé d'émulsion ou de microsuspension. La résine thermoplastique se présente de préférence sous la forme de particules dont le diamètre moyen peut aller jusqu'au micron.

La composition (A1) comprend en outre au moins un plastifiant, de préférence un plastifiant organique. De préférence, les plastifiants sont choisis parmi les esters phtaliques et trimellitiques, phosphoriques et adipiques. Les plastifiants peuvent également être choisis parmi les plastifiants polymériques par exemple polyadipate.

La composition (A1) peut en outre comprendre un ou plusieurs stabilisants. En effet, sous l'effet de la chaleur, de l'oxygène et/ou des UV, la résine thermoplastique, notamment PVC, a tendance à se dégrader. La composition (A1) peut donc comprendre :
- Un ou plusieurs stabilisant thermique par exemple choisi parmi les sels métalliques, par exemple sels de métaux alcalins ou alcalino-terreux ou métaux de transition, par exemple sels de calcium, sels de baryum ou sels de zinc ; et/ou les complexes à base d'aluminium, de potassium ou de sodium ; et/ou
- Un ou plusieurs stabilisant anti-UV choisis parmi les benzotriazoles et les cyanoacrylates.

La composition (A1) selon l'invention peut en outre comprendre des charges. De manière générale, les charges sont des substances inertes, généralement minérales, permettant de modifier certaines propriétés par exemple mécanique, électrique, thermique, etc. Les charges sont notamment choisies parmi les carbonates de calcium (naturels ou précipités), les kaolins calcinés, le talc, les dolomies, le sulfate de baryum, les oxydes métalliques.

La composition (A1) selon l'invention peut en outre comprendre au moins un pigment. Les pigments sont notamment choisis parmi :
- Les colorants organiques de type azoïque, anthraquinonique ;
- Les pigments minéraux, notamment choisis parmi les oxydes de titane, les oxydes de fer, les oxydes de chrome, les oxydes de manganèse, les oxydes de cobalt ;
- Les composés organométalliques par exemple les phtalocyanine de cuivre ;
- Les noirs de carbone ;
- Les pigments métallisés, par exemple pigment aluminium, pigment interférentiel.

La composition (A1) peut en outre comprendre d'autres additifs tels que des composés antistatiques, des fongicides, des gonflants, des améliorants de la gélification, etc.

De préférence, la composition (A1) comprend :
- De 40 à 50% en poids, de préférence de 45 à 50% en poids, de résine thermoplastique ;
- de 25 à 40% en poids, de préférence de 30 à 40% en poids, de plastifiant ;
- de 5 à 10% en poids, de préférence de 8 à 10% en poids, de solvant ;
- de 0 à 5 % en poids, de préférence de 3 à 5 % en poids, de pigment ;
- de 0 à 3 % en poids, de préférence de 1 à 3 % en poids, d'additifs ;
- de 0 à 3 % en poids, de préférence de 1 à 3 % en poids, de charge ;
- de 0 à 5 % en poids, de préférence de 3 à 5% en poids, de stabilisant thermique.
La composition (A1) peut être appliquée sans chauffage préalable du moule ou bien après un chauffage pour atteindre une température du moule comprise entre 20 et 50°C.

### Composition A2 :

La composition (A2) comprend au moins une résine thermoplastique notamment telle que définie pour la composition (A), de préférence choisie parmi le polychlorure de vinyle (PVC) ou un mélange de PVC et d'un polymère compatible choisi parmi les copolymères ou terpolymères chlorure de vinyle et acétate de vinyle (VC/VA) ou chlorure de vinyle et dérivé acrylique (VC/DA), les polyuréthanes thermoplastiques (TPU), les polyétheresters thermoplastiques, les copolymères éthylène/monomère vinyilique (EVA), les terpolymères éthylène/ monomère vinylique/carbonyle, les élastomères acryliques processables à l'état fondu, les copolymères à blocs polyamide et à blocs polyéther ou polyétherblockamides, les polyéthylènes chlorés ou chlorosulfonés, les polymères éthylène/ (méth) acrylate d'alkyle ou acide (méth) acrylique fonctionnalisés ou non, les polymères core-shell type MBS, les terpolymères bloc SBM, le PVDF et les résines polyamides en poudre. Selon un mode de réalisation préféré de l'invention, la résine thermoplastique utilisée est un polychlorure de vinyle (PVC) de Kwert compris entre 50 et 100.

Selon un mode de réalisation, la résine thermoplastique de la composition (A2) est du polychlorure de vinyle (PVC) obtenu par un procédé en suspension ou en microsuspension, mais du PVC fabriqué en émulsion ou en masse peut aussi être utilisé. Un exemple de copolymère VC/VA est Lacovyl^{®} de Arkema, un exemple de copolymère VC/DA est Vinnolit^{®} de Vinnolit, un exemple de TPU est Estane^{®} de Goodrich, un exemple de polyétherester thermoplastique est Hytrel^{®} de DuPont, un exemple de polyétherblockamide est Pebax^{®} de Arkema, un exemple d'EVA est Evatane^{®} d' Arkema, un exemple de terpolymère éthylène/ monomère vinylique/carbonyle est Elvaloy^{®} de DuPont, des exemples de polymères éthylène/ (méth) acrylate d'alkyle ou acide (méth) acrylique fonctionnalisés ou non sont Lotryl^{®}, Lotader^{®} et Orevac^{®} de Arkema, un exemple de polyéthylènes chlorés ou chlorosulfonés est Tyrin^{®} de DuPont, un exemple d'élastomère acrylique processable à l'état fondu est Alcryn^{®} de Apa, un exemple de résines polyamides en poudre est Orgasol^{®} de Arkema. Ces polymères compatibles avec le PVC, dits " alliés ", présentent de bonnes propriétés à froid, et sont susceptibles de conférer une fragilité appropriée aux couches les renfermant.

La composition (A2) peut ainsi comprendre des mélanges de résines thermoplastiques comprenant des résines PVC et des copolymères ou terpolymères chlorure de vinyle et acétate de vinyle (VC/VA) ou chlorure de vinyle et dérivé acrylique (VC/DA), ainsi que des résines PVC et des polyuréthanes thermoplastiques (TPU). Ces différentes résines peuvent être mélangées entre elles dans de larges proportions.

La composition (A2) peut également comprendre un plastifiant ou un mélange de plastifiant tel que défini ci-dessus pour les compositions (A) et (A1). Le ratio en poids de la résine thermoplastique au plastifiant dans la composition (A2) est alors compris entre 1:0,1 et 1:2, et de préférence compris entre 1:0,5 et 1:1. Ce ratio permet d'obtenir une résine particulièrement résistante à l'abrasion.

La composition (A2) peut en outre comprendre au moins un pigment notamment tel que défini pour les compositions (A) et (A1).

La composition (A2), de préférence sous forme de poudre peut être déposée suivant les techniques usuelles de moulage comme le pistolage, le rotomoulage. Le pistolage consiste en un dépôt d'une poudre sur le moule fondé sur un effet électrostatique.

Le rotomoulage consiste à appliquer une quantité strictement nécessaire de poudre dans le moule tout en appliquant des mouvements de rotation du moule, ce qui permet à la poudre de se déposer sur la surface du moule. Lorsque l'on introduit dans le moule une quantité de poudre supérieure à celle nécessaire pour le dépôt par rotation, la quantité excédentaire après dépôt de la poudre sur le moule peut être éliminée par gravité. Cette technique est connue sous le nom de "slush-moulding" ou embouage. Cette dernière technique de dépôt est particulièrement préférée. En "slush-moulding", la composition (A2), sous forme de poudre est déposée par rotation de l'ensemble du dispositif qui comprend le moule ainsi que le réservoir permettant de déposer la composition (A2). Le nombre de rotations du dispositif est choisi en fonction de l'épaisseur de la couche de composition (A2) souhaitée.

De préférence, la composition (A2) comprend :
- de 45 à 55% en poids, de préférence de 50 à 55% en poids, de résine thermoplastique ;
- de 35 à 4 % en poids, de préférence de 40 à 45% en poids, de plastifiant ;
- de 0 à 3% en poids, de préférence de 1 à 3% en poids, de pigment ;
- de 0 à 3% en poids, de préférence de 1 à 3% en poids, d'additifs ;
- de 0 à 3% en poids, de préférence de 1 à 3% en poids, de charge ;
- de 0 à 3% en poids, de préférence de 1 à 3% en poids, de stabilisant thermique.

Avant l'étape de dépôt de la composition (A2), le moule est chauffé pour atteindre une température du moule comprise entre 150 et 360°C, de préférence entre 180 et 260°C.

Dans un mode de réalisation, le procédé selon l'invention comprend les étapes suivantes :
a) Fournir un moule ;
   a0) Appliquer une composition de vernis (A0) en fond de moule ;
b) Appliquer une composition (A1) comprenant au moins une résine thermoplastique;
   a1) Chauffer le moule de préférence à une température comprise entre 20 et 100°C, de préférence entre 50 et 100°C, et appliquer sur tout ou partie du moule une composition (B);
c) Chauffer le moule, de préférence à une température comprise entre 70 et 300°C, de préférence entre 100 et 220°C
c) Appliquer le textile sur la résine thermoplastique chauffée ;
d) Refroidir le moule ;
e) Démouler.

Eventuellement, avant l'étape b) le moule obtenu à l'étape a0) est chauffé pour atteindre une température du moule comprise entre 20 et 50°C.

Dans un autre mode de réalisation, le procédé selon l'invention peut également comprendre les étapes suivantes :
a) Fournir un moule ;
   a0) Appliquer sur tout ou partie du moule une composition de vernis (A0) en fond de moule ;
   a1) Chauffer le moule de préférence à une température comprise entre 20 et 100°C, de préférence entre 50 et 100°C, et appliquer sur tout ou partie du moule une composition (B) ;
b) Appliquer une composition (A1) comprenant au moins une résine thermoplastique;
c) Chauffer le moule, de préférence à une température comprise entre 70 et 300°C, de préférence entre 100 et 220°C;
d) Appliquer le textile sur la résine thermoplastique chauffée ;
e) Refroidir le moule ;
f) Démouler.

Eventuellement, avant l'étape b) le moule obtenu à l'étape a1) est chauffé pour atteindre une température du moule comprise entre 20 et 50°C.

Dans un autre mode de réalisation, le procédé selon l'invention peut également comprendre les étapes suivantes :
a) Fournir un moule ;
   a0) Appliquer sur tout ou partie du moule une composition de vernis (A0) en fond de moule ;
b) Chauffer le moule de préférence à une température comprise entre 150 et 360°C, de préférence entre 180 et 260°C et appliquer une composition (A2) comprenant au moins une résine thermoplastique;
   b2) refroidissement du moule à une température comprise entre 20 et 100°C, de préférence entre 50 et 100°C,
   a1) appliquer sur tout ou partie du moule une composition (B);
c) Chauffer le moule, de préférence à une température comprise entre 70 et 300°C, de préférence entre 100 et 200°C ;
d) Appliquer le textile sur la résine thermoplastique chauffée ;
e) Refroidir le moule ;
f) Démouler.

Dans un autre mode de réalisation, le procédé selon l'invention peut également comprendre les étapes suivantes :
a) Fournir un moule ;
   a0) Appliquer sur tout ou partie du moule une composition de vernis (A0) en fond de moule ;
   a1) Chauffer le moule de préférence à une température comprise entre 20 et 100°C, de préférence entre 80 et 100°C, et appliquer sur tout ou partie du moule une composition (B) ;
b) Chauffer le moule de préférence à une température comprise entre 150 et 360°C, de préférence entre 180 et 260°C et appliquer une composition (A2) comprenant au moins une résine thermoplastique;
c) Chauffer le moule de préférence à une température comprise entre 70 et 300°C, de préférence entre 100 et 260°C;
d) Appliquer le textile sur la résine thermoplastique chauffée ;
e) Refroidir le moule ;
f) Démouler.

La composition (A1) peut être appliquée par raclage sur le moule, ou sur le moule obtenu à la suite des étapes a0) ou a1), ou par pulvérisation notamment en fonction de l'épaisseur désirée. Par exemple, pour une épaisseur comprise entre 20 et 150 µm on pourra utiliser la pulvérisation et pour une épaisseur de 150 à 1,5 mm on pourra utiliser le raclage. Dans le cas où l'épaisseur de la couche (A1) est inférieure ou égale à 500 µm, de préférence inférieure ou égale à 400 µm, le procédé de l'invention comprend une étape supplémentaire d'application de la composition (A2).

Ainsi, dans un mode de réalisation, le procédé de l'invention peut comprendre les étapes suivantes :
a) Fournir un moule ;
   a0) Appliquer sur tout ou partie du moule une composition de vernis (A0) en fond de moule ;
b) Appliquer une composition (A1) comprenant au moins une résine thermoplastique en fond de moule ;
   a1) Chauffer le moule de préférence à une température comprise entre 20 et 100°C, de préférence entre 50 et 100°C, et appliquer sur tout ou partie du moule une composition (B) ;
   b1) Chauffer le moule de préférence à une température comprise entre 150 et 360°C, de préférence entre 180 et 260°C et appliquer une composition (A2) comprenant au moins une résine thermoplastique;
c) Chauffer le moule de préférence à une température comprise entre 70 et 300°C, de préférence entre 100 et 260°C ;
d) Appliquer le textile sur la résine thermoplastique chauffée ;
e) Refroidir le moule ;
f) Démouler.

Eventuellement, avant l'étape b) le moule obtenu à l'étape a0) est chauffé pour atteindre une température du moule comprise entre 20 et 50°C.

Dans un autre mode de réalisation, le procédé selon l'invention peut également comprendre les étapes suivantes :
a) Fournir un moule ;
   a0) Appliquer sur tout ou partie du moule une composition de vernis (A0) en fond de moule ;
   a1) Chauffer le moule de préférence à une température comprise entre 20 et 100°C, de préférence entre 50 et 100°C, et appliquer sur tout ou partie du moule une composition (B) ;
b) Appliquer une composition (A1) comprenant au moins une résine thermoplastique;
   b1) Chauffer le moule de préférence à une température comprise entre 150 et 360°C, de préférence entre 180 et 260°C et appliquer une composition (A2) comprenant au moins une résine thermoplastique;
c) Chauffer le moule de préférence à une température comprise entre 70 et 300°C, de préférence entre 100 et 260°C ;
d) Appliquer le textile sur la résine thermoplastique chauffée ;
e) Refroidir le moule ;
f) Démouler.

Eventuellement, avant l'étape b) le moule obtenu à l'étape a1) est chauffé pour atteindre une température du moule comprise entre 20 et 50°C.

Dans un autre mode de réalisation, le procédé selon l'invention peut également comprendre les étapes suivantes :
a) Fournir un moule ;
   a0) Appliquer sur tout ou partie du moule une composition de vernis (A0) en fond de moule puis chauffage du moule ;
b) Appliquer une composition (A1) comprenant au moins une résine thermoplastique;
   b1) Chauffer le moule de préférence à une température comprise entre 150 et 360°C, de préférence entre 180 et 260°C et appliquer une composition (A2) comprenant au moins une résine thermoplastique;
   b2) refroidissement du moule à une température comprise entre 20 et 100°C, de préférence entre 50 et 100°C,
   a1) appliquer sur tout ou partie du moule une composition (B) ;
c) Chauffer le moule de préférence à une température comprise entre 70 et 300°C, de préférence entre 100 et 200°C ;
d) Appliquer le textile sur la résine thermoplastique chauffée ;
e) Refroidir le moule ;
f) Démouler.

Eventuellement, avant l'étape b) le moule obtenu à l'étape a0) est chauffé pour atteindre une température du moule comprise entre 20 et 50°C.

La composition (A2), avantageusement sous forme de poudre, est versée ou appliquée sur le moule, sur la composition (A0), (A1) ou (B). Avant le dépôt de la composition (A2), le moule doit être chauffé pour atteindre une température du moule comprise entre 150°C et 300°C, de préférence entre 180°C et 260°C, et de manière tout à fait préférée entre 200°C et 230°C. Au cours de l'application de la composition (A2) sur le moule, la température du moule peut diminuer jusqu'à une température comprise entre 130° et 190°C.

Pour que la couche de composition (A2) adhère correctement au moule ou au moule revêtu de la composition (A0), (B) ou (A1), la température d'application de la composition (A2), dite température de poudrage, doit être comprise dans les gammes définies ci-dessus. En effet, lors de l'étape de dépôt de la composition (A2), les premiers grains de composition (A2) qui tombent doivent gélifier rapidement et coller au moule ou le cas échéant à l'une des compositions (A0), (A1) ou (B). Les grains suivants se collent aux premiers et gélifient également en mêlant leurs chaînes de résine thermoplastique, notamment PVC, à celles des grains environnants (interpénétrations des chaînes, notamment des chaînes PVC). Si la température est trop faible, les premiers grains ne peuvent pas commencer à gélifier donc ne vont pas coller à la coquille. Les grains de résine, notamment résine PVC, ne vont pas coller entre eux : on obtiendrait une structure poreuse mal gélifiée.

Après application de la composition (A2), le moule est chauffé, avant application du textile jusqu'à gélification de la composition (A2), c'est à dire de préférence jusqu'à une température comprise entre 150°C et 300°C. Cette température est choisie en fonction de la nature de la résine thermoplastique à transformer. Ainsi pour les polychlorure de vinyle elle est avantageusement comprise entre 180°C et 260°C, et de préférence, entre 230°C et 250°C.

Les compositions (A1) et (A2) peuvent être déposées en une ou plusieurs passes.

### Composition (B) :

La composition (B) selon l'invention est une composition d'encre qui permet de fournir des éléments en couleur sur la pièce. Cette composition (B) présente, de préférence, une viscosité comprise de préférence entre 5 et 40 mPa.s et de manière encore plus préférée comprise entre 8 et 25 mPa.s à 20°C, mesurée avec un viscosimètre de type BROOKFlELD^{®}.

De préférence, la composition (B) comprend, en poids par rapport au poids de la composition :
- 5 à 20%, de préférence 10 à 15%, d'au moins une résine thermoplastique ou thermodurcissable dont les particules ont une taille comprise entre 0,1 et 10 µm, de préférence entre 0,1 et 5 µm;
- 1 à 20%, de préférence 5 à 15%, d'au moins un agent modifiant (également appelé agent colorant) ;
- 5 à 20%, de préférence 10 à 15%, d'au moins un plastifiant, et
- 45 à 75%, de préférence 50 à 70%, d'au moins un solvant organique ou d'eau.

De façon particulièrement avantageuse, cette composition (B) peut être projetée à travers des buses d'impression de faible diamètre, et par exemple d'un diamètre de 40 µm, et même d'un diamètre de 30 µm ou 20 µm en vue de l'obtention d'une surface imprimée de grande qualité. Il est ainsi possible d'obtenir une impression par exemple en 360, 600, 720, 1000 ou 1400 dpi en un ou deux passages d'une tête d'impression sur un support.

La résine peut être une résine thermodure, ou « thermodurcissable », et en particulier parmi les résines thermodurcissables on préfère celles comprenant des motifs époxy, isocyanate ou acide, qui conduisent à l'obtention de réseaux thermodurs de type époxy, polyuréthane, ou polyester.

De préférence, la résine est une résine thermoplastique. Dans ce cas, le ratio en poids de la résine thermoplastique au plastifiant est compris entre 1:0,1 et 1:2, et de préférence compris entre 1:0,5 et 1:1. Ce ratio permet d'obtenir une résine particulièrement résistante à l'abrasion.

La ou les résines thermoplastiques peuvent être choisies parmi le polychlorure de vinyle, le polychlorure de vinyle chloré (CPVC), les polymères acryliques, les encres UV, les latex, les copolymères de chlorure de vinyle par exemple les copolymères de chlorure de vinyle et d'acétate de vinyle, et le polyfluorure de vinylidène, les polyamides tels que le polyamide 11 et le polyamide 12, le polyéthylène haute densité et le polyméthacylate de méthyle. Avantageusement, on choisit le polychlorure de vinyle et le polyméthacrylate de méthyle et les copolymères de chlorure de vinyle et d'acétate de vinyle. De préférence, la résine thermoplastique est une résine polychlorure de vinyle (ou PVC) pouvant être obtenue par un procédé en émulsion, en suspension ou en microsuspension. On peut citer à titre d'exemple la résine commercialisée sous la dénomination Pevikon^{®} P1510 par la société INEOS.

Les encres UV sont généralement constituées d'au moins un agent colorant, d'un véhicule généralement comprenant un diluant réactifs de type monomère et au moins un prépolymère, d'au moins un additif et d'au moins un photoamorceur. Les agents colorants sont généralement présents dans la composition d'encre UV dans une proportion de 15 à 20 % en poids par rapport au poids de la composition, ils sont tels que décrits ci-dessous. Les agents colorants sont généralement des composés cristallins d'origine organique. Les photoamorceurs sont généralement compris dans une proportion inférieure à 10% en poids par rapport au poids de la composition d'encre UV. Un mélange de différents photoamorceurs est généralement utilisé afin de mieux absorber le rayonnement UV, les photoamorceurs peuvent notamment être choisis parmi les cétones aromatiques dans le cas de la polymérisation radicalaire et les sels d'onium dans le cas de la polymérisation cationique, ces composés conduisent à la formation de radicaux libres si la polymérisation est de type radicalaire ou à des cations et acides protiques forts si elle est de type cationique. Dans le cas de la polymérisation radicalaire, les photoamorceurs sont souvent utilisés en excès pour pallier la présence d'oxygène de l'air qui inhibe l'amorçage radicalaire, de mainère avantageuse, on y ajoute une amine synergiste ou un photosensibilisateur pour augmenter l'absorption du rayonnement UV et accélérer leur décomposition. Les macromonomères ou prépolymères utilisés à raison d'environ 30% en poids de la composition d'encre UV jouent le rôle de résine car ils ont un poids moléculaires élevé (>500 g.mol-1). Ils confèrent au film d'encre des propriétés mécaniques, de résistance chimique ou d'adhésion sur le support. Ils peuvent être couplés avec des résines inertes afin d'optimiser ces propriétés. Dans le cas de la polymérisation radicalaire, ils sont le plus souvent de nature acryliques, tandis que dans le cas d'un mécanisme cationique, ce sont majoritairement des oxiranes ou des éthers vinyliques. Des exemples de prépolymères sont notamment les résines époxy-acrylate, les résine polyuréthane acrylate, les résine polyester urétane acrylate, les résine polyester acrylate, les résines polyéther acrylate, les résines époxyde bicycloaliphatique, les résines divinyléther, les résines glycidyl vinyléther. Les monomères ou diluants réactifs représentant environ 25% en poinds de la composition d'encre UV constituent le « solvant » du véhicule car ils ont des poids moléculaires faibles (<500 g.mol-1). Ils jouent le rôle de plastifiant en permettant de réguler la viscosité du véhicule. Il s'agit le plus souvent d'un mélange de monomères mono- et multifonctionnels qui vont copolymériser avec les prépolymères et ainsi accélérer la réticulation du film d'encre. Les additifs représentant jusqu'à 10% en poids de la composition d'encre sont notamment choisis parmi les stabilisants pour éviter la prise en masse de l'encre durant le stockage, les antioxydants pour éviter la formation d'une pellicule à la surface de l'encre durant le stockage, les plastifiants pour donner de la souplesse au film d'encre ou encore les tensio-actifs, les agents glissants ou antimousse s'il s'agit d'une encre liquide.

La résine de la composition (B) peut également être une résine polyuréthane ou un latex. Au sens de la présente invention, on entend par agent colorant, tout composé susceptible de modifier l'aspect visuel des objets moulés, et notamment les pigments.

Le ou les pigments utilisés peuvent être aussi bien organiques, que minéraux. On peut citer à titre d'exemple, les oxydes métalliques, enrobés ou non, comme par exemple des oxydes de titane (amorphe ou cristallisé sous forme rutile et/ou anatase), de fer, de zinc, de zirconium ou de cérium et leurs mélanges. On peut citer notamment le pigment jaune commercialisé par la société CIBA sous la dénomination Jaune cromophtal^{®} PV H3R, le dioxyde de titane commercialisé par la société kronos sous la dénomination KRONOS^{®} 2220, le pigment bleu commercialisé par la société CIBA sous la dénomination cromophtal^{®} 4GNP et leurs mélanges. Le pigment mis en oeuvre dans la composition objet de l'invention peut se présenter sous forme de pâte pigmentaire, comprenant un mélange de pigment et de solvant ou un mélange de pigment et de plastifiant, éventuellement en mélange avec un agent dispersant.

Les paillettes sont utilisées en général pour rendre l'objet plus esthétique. La teneur en paillettes dans l'objet fabriqué est généralement comprise entre environ 5 et environ 50 g/cm². On utilise de préférence les paillettes à base d'oxyde de titane recouvertes de mica.

Le plastifiant mis en oeuvre dans la composition objet de l'invention est un plastifiant compatible avec la résine thermoplastique. Le plastifiant peut être choisi parmi les esters formés à partir d'alcool et d'acide organique tel que l'acide trimellitique, l'acide sébacique, adipique, phtalique, citrique, benzoïque, tallique, glutarique, fumarique, maléique, oléique, palmitique et acétique. Notamment le plastifiant peut être choisi parmi le trimellitate d'octyle, le dioctyl phtalate, le nonyl undecyl phtalate, le dioctyl adipate, le phosphate de tricresyle, le triméthyl pentanyl diisobutyrate, et leurs mélanges. Le plus souvent, on utilise les phtalates et les trimellitates en particulier le trimellitate d'octyle. On peut citer à titre d'exemple les produits commercialisés par la société POLYNT sous les dénominations Diplast^{®} TM/ST, et Diplast^{®} TM79 les produits commercialisés par la société ADEKA PALMAROLE, sous la dénomination CIZER^{®} C8L, et les produits commercialisés par la société EASTMAN sous la dénomination TXIB^{®}. Des mélanges de ces produits peuvent être utilisés en tant que plastifiant.

Le solvant organique mis en oeuvre dans la composition (B) peut être un solvant dont la température d'ébullition est de préférence au moins égale à 200°C. L'utilisation d'un tel solvant permet d'éviter une vaporisation trop rapide au moment de l'application de la composition objet de l'invention sur une pièce moulée, et d'éviter ainsi que des opérateurs ne soient en contact avec des composés organiques volatils. De préférence, le solvant organique est choisi parmi l'isophorone, l'acétate de pentyle, les lactate d'alkyle, en particulier le lactate d'éthyle, les esters dibasiques des acides adipique, glutarique et succinique, et leurs mélanges, en particulier les mélanges d'adipate de diméthyle, de glutarate de diméthyle et de succinate de diméthyle. A titre d'exemple de solvant on peut citer le produit commercialisé par la société EXXONMOBIL sous la dénomination commerciale EXXSOL D140^{®}.

Afin de faire varier la viscosité de la composition (B) dans les plages définies ci-dessus, un additif de rhéologie peut être ajouté. En particulier, il peut être nécessaire d'abaisser la viscosité de la composition (B) en utilisant un abaisseur de viscosité. Il peut s'agir d'un diluant volatile, d'un émulsifiant ou d'un colloïde protecteur. Les diluants peuvent en particulier inclure des hydrocarbures à faible point d'ébullition tel que les hydrocarbures en C10-C16. Les émulsifiants incluent des sels ou esters d'acides gras, des condensats d'oxyde d'éthylène avec des phényls alkyles, ou des alcools gras, de l'octoate de zinc/magnésium. Les colloïdes protecteurs sont par exemple les lécithines. La quantité d'additif de rhéologie ajoutée dans la composition (B) est en général de 5 à 100 parties en poids, pour 100 parties en poids de résine thermoplastique. A titre d'exemple d'additif de rhéologie, on peut citer les esters d'acides carboxyliques commercialisés sous la dénomination commerciale VISCOBYK 5100^{®} par la société BYK CHEMIE GmbH.

La composition (B) peut comprendre en outre un ou plusieurs additifs, choisis parmi des charges, des stabilisants, des antioxydants, des additifs de mise en oeuvre, des lubrifiants ou des agents ignifugeants. En particulier, parmi les additifs communément utilisés dans des compositions à base de résine vinylique, on peut citer des sels métalliques d'acide carboxylique organique, des acides phosphorique organique, des zéolites, des hydrotalcites, des composés époxidés, des béta-dicétones , des alcools polyhydriques, des antioxydants phosphorés, soufrés ou phénolique, des absorbeurs ultraviolet par exemple des benzophenones, benzotriazoles, et dérivés d'oxanilide, des cyanoacrylates, des stabilisants lumière à aminé encombrées ou « HALS » pour « hindered aminé light stabilizer », des stabilisants à alcoxyamine encombrée ou « NOR HALS » pour « Alkoxyamine hindered aminé light stabilizer », notamment les produits commercialisés par Clariant sous la dénomination Hostavin Now^{®}, des sels d'acide perchlorique, et d'autres composés inorganiques à base de métaux, des lubrifiants par exemple des cires organiques, des alcools gras, des acides gras, des esters, des sels métalliques, des charges par exemple de la craie ou du talc, des agents d'expansion par exemple des azodicarbonamides.

De préférence, au cours de l'étape a1), des buses d'impression d'un diamètre inférieur ou égal à 40µm, et de préférence d'un diamètre de 30 µm ou 20 µm, sont mises en oeuvre pour déposer la couche de composition (B). Ladite couche de composition (B) peut être déposée sur l'ensemble du moule ou uniquement sur la partie du moule afin de permettre la création, sur la toile enduite, d'un motif coloré. On peut citer à titre d'exemple l'utilisation de buse d'impression Omnidot^{®} 760 GS8 de la société XAAR, Cambridge, Royaume-Uni, d'autres tête d'impression, par exemple Koninca Minolta KM512 ^{®} peuvent être utilisée. Avant le dépôt de la composition (B), le moule doit être de préférence chauffé pour atteindre une température du moule comprise entre 20 et 100°C, de préférence entre 80 et 100°C.

De façon particulièrement avantageuse, lors de l'étape a1) la composition (B) est déposée avec un ensemble d'impression à jet d'encre, ladite étape a1) comprenant également une étape de pilotage dudit ensemble d'impression à jet d'encre, ledit ensemble d'impression étant équipé de moyens de déplacement et d'orientation selon plusieurs axes et d'au moins une unité de contrôle de ces moyens. L'ensemble d'impression à jet d'encre est notamment tel que défini dans la demande EP2691240.

L'ensemble d'impression à jet d'encre peut être équipé en outre d'un dispositif de mélange de la composition (B). Le dispositif de mélange est notamment tel que défini dans la demande EP2691240.

L'ensemble d'impression jet d'encre peut être connecté à une unité de contrôle permettant l'ouverture et la fermeture de vannes, le contrôle des flux par des pompes, la vitesse de rotation d'éventuels mélangeurs, etc. Une telle unité de contrôle est notamment définie dans la demande EP2691240.

L'ensemble d'impression à jet d'encre est équipé de moyens de déplacement et d'orientation selon plusieurs axes. Ces moyens de déplacement sont notamment tels que définis dans la demande EP2691240.

Avantageusement, les moyens de déplacement (nommés également robot) sont contrôlés par un dispositif de pré-positionnement puis de contrôle en temps réel des têtes d'impression. Un dispositif de pré-positionnement est notamment tel que décrit dans la demande EP2691240.

Cela permet de façon avantageuse de positionner de façon très précise la composition (B) en fonction du rendu désiré et permet donc de faire des impressions placées par exemple sur les motifs créés par le moule.

De préférence, afin de placer de façon précise la composition (B) dans le moule, il est réalisé un scan du moule comprenant l'emplacement à imprimer. Le scan est chargé dans l'ensemble d'impression à jet d'encre.

Ainsi, de préférence, le procédé de l'invention comprend les étapes suivantes :
a) Fournir un moule ;
   i) Optionnellement faire un scan du moule puis traiter le signal obtenu pour donner une image ;
   ii) Charger l'image issue de i) ou une image dans un ensemble d'impression à jet d'encre ;

   a0) déposer une couche de composition (A0) en fond de moule ;
   a1) après chauffage du moule obtenu à l'étape a) ou a0) de préférence à une température comprise entre 20 et 100°C, de préférence entre 50 et 100°C, déposer la composition (B) à l'aide de l'ensemble d'impression à jet d'encre en fonction de l'image chargée ;
b) Après éventuel chauffage, appliquer au moins une composition (A) comprenant au moins une résine thermoplastique ;
c) Chauffer le moule ;
d) Appliquer le textile sur la résine thermoplastique chauffée ;
e) Refroidir le moule ;
f) Démouler.

Si l'impression ne doit pas être placée sur le moule, par exemple impression sur toute la surface du moule, ou bien si le même moule est utilisé en série et que le scan du moule a déjà été réalisé, l'étape de scan du moule n'est pas nécessaire, ainsi le procédé selon l'invention comprendra les étapes suivantes :
a) Fournir un moule ;
   i) Optionnellement faire un scan du moule puis traiter le signal obtenu pour donner une image ;
   ii) Charger l'image issue de l'étape i) ou une image dans un ensemble d'impression à jet d'encre ;

   a0) déposer une couche de composition (A0) en fond de moule ;
   a1) après chauffage du moule obtenu à l'étape a) ou a0) de préférence à une température comprise entre 20 et 100°C, de préférence entre 50 et 100°C déposer la composition (B) à l'aide de l'ensemble d'impression à jet d'encre en fonction de l'image chargée ;
b) Après éventuel chauffage, appliquer au moins une composition (A) comprenant au moins une résine thermoplastique ;
c) Chauffer le moule ;
d) Appliquer le textile sur la résine thermoplastique chauffée ;
e) Refroidir le moule ;
f) Démouler.

Selon la nature de la composition (A) le moule peut être préalablement chauffé avant l'application de la composition (A).

Dans un autre mode de réalisation, le procédé de l'invention comprend les étapes suivantes :
a) Fournir un moule ;
   i) Optionnellement faire un scan du moule puis traiter le signal obtenu pour donner une image ;
   ii) Charger l'image issue de l'étape i) ou une image dans un ensemble d'impression à jet d'encre ;

   a0) déposer une couche de composition (A0) en fond de moule ;
   a1) chauffer le moule puis obtenu à l'étape a) ou a0) de préférence à une température comprise entre 20 et 100°C, de préférence entre 50 et 100°C déposer la composition (B) à l'aide de l'ensemble d'impression à jet d'encre en fonction de l'image chargée;
b) Eventuellement chauffer le moule à une température comprise entre 20 et 50°C, et appliquer une composition (A1) comprenant au moins une résine thermoplastique;
c) Chauffer le moule de préférence à une température comprise entre 70 et 300°C, de préférence entre 100 et 220°C;
d) Appliquer le textile sur la résine thermoplastique chauffée;
e) Refroidir le moule ;
f) Démouler.

Dans un autre mode de réalisation, le procédé de l'invention comprend les étapes suivantes :
a) Fournir un moule ;
   i) Optionnellement faire un scan du moule puis traiter le signal obtenu pour donner une image ;
   ii) Charger l'image issue de l'étape i) ou une image dans un ensemble d'impression à jet d'encre ;
   a0) déposer une couche de composition (A0) en fond de moule :
   a1) chauffer le moule obtenu à l'étape a) ou a0) de préférence à une température comprise entre 20 et 100°C, de préférence entre 50 et 100°C et déposer la composition (B) à l'aide de l'ensemble d'impression à jet d'encre en fonction de l'image chargée;
b) Chauffer le moule de préférence à une température comprise entre 150 et 360°C, de préférence entre 180 et 260°C puis appliquer une composition (A2) comprenant au moins une résine thermoplastique;
c) Chauffer le moule de préférence à une température comprise entre 70 et 300°C, de préférence entre 100 et 260°C;
d) Appliquer le textile sur la résine thermoplastique chauffée;
e) Refroidir le moule ;
f) Démouler.

Dans un autre mode de réalisation, le procédé de l'invention comprend les étapes suivantes :
a) Fournir un moule ;
   i) Optionnellement faire un scan du moule puis traiter le signal obtenu pour donner une image ;
   ii) Charger l'image issue de l'étape i) ou une image dans un ensemble d'impression à jet d'encre ;
   a0) déposer une couche de composition (A0) en fond de moule :
   a1) chauffer le moule de préférence à une température comprise entre 20 et 100°C, de préférence entre 50 et 100°C et déposer la composition (B) à l'aide de l'ensemble d'impression à jet d'encre en fonction de l'image chargée ;
b) Eventuellement chauffer le moule à une température comprise entre 20 et 50°C, et Appliquer une composition (A1) comprenant au moins une résine thermoplastique;
   b1) Chauffer le moule de préférence à une température comprise entre 150 et 360°C, de préférence entre 180 et 260°C et appliquer une composition (A2) comprenant au moins une résine thermoplastique;
c) Chauffer le moule de préférence à une température comprise entre 70 et 300°C, de préférence entre 100 et 260°C;
d) Appliquer le textile sur la résine thermoplastique chauffée ;
e) Refroidir le moule ;
f) Démouler.

Dans un autre mode de réalisation, le procédé de l'invention comprend les étapes suivantes :
a) Fournir un moule ;
   i) Optionnellement faire un scan du moule puis traiter le signal obtenu pour donner une image ;
   ii) Charger l'image issue de l'étape i) ou une image dans un ensemble d'impression à jet d'encre ;
   a0) déposer une couche de composition (A0) en fond de moule ;
b) Eventuellement chauffer le moule à une température comprise entre 20 et 50°C, et appliquer une composition (A1) comprenant au moins une résine thermoplastique;
   a1) chauffer le moule de préférence à une température comprise entre 20 et 100°C, de préférence entre 50 et 100°C puis déposer la composition (B) à l'aide de l'ensemble d'impression à jet d'encre en fonction de l'image chargée;
c) Chauffer le moule de préférence à une température comprise entre 70 et 300°C, de préférence entre 100 et 260°C;
d) Appliquer le textile sur la résine thermoplastique chauffée;
e) Refroidir le moule ;
f) Démouler.

Dans un autre mode de réalisation, le procédé de l'invention comprend les étapes suivantes :
a) Fournir un moule ;
   i) Optionnellement faire un scan du moule puis traiter le signal obtenu pour donner une image ;
   ii) Charger l'image issue de l'étape i) ou une image dans un ensemble d'impression à jet d'encre ;
   a0) déposer une couche de composition (A0) en fond de moule ;
b) Chauffer le moule de préférence à une température comprise entre 150 et 360°C, de préférence entre 180 et 260°C puis appliquer une composition (A2) comprenant au moins une résine thermoplastique;
   b2) refroidissement du moule à une température comprise entre 20 et 100°C, de préférence entre 50 et 100°C,
   a1) déposer la composition (B) à l'aide de l'ensemble d'impression à jet d'encre en fonction de l'image chargée;
c) Chauffer le moule de préférence à une température comprise entre 70 et 300°C, de préférence entre 100 et 260°C;
d) Appliquer le textile sur la résine thermoplastique chauffée;
e) Refroidir le moule ;
f) Démouler.

Dans un autre mode de réalisation, le procédé de l'invention comprend les étapes suivantes :
a) Fournir un moule ;
   i) Optionnellement faire un scan du moule puis traiter le signal obtenu pour donner une image ;
   ii) Charger l'image issue de l'étape i) ou une image dans un ensemble d'impression à jet d'encre ;
   a0) déposer une couche de composition (A0) en fond de moule ;
b) Optionnellement chauffer le moule de préférence à une température comprise entre 20 et 50°C et appliquer une composition (A1) comprenant au moins une résine thermoplastique;
   b1) Chauffer le moule de préférence à une température comprise entre 150 et 360°C, de préférence entre 180 et 260°C et appliquer une composition (A2) comprenant au moins une résine thermoplastique;
   b2) refroidissement du moule à une température comprise entre 20 et 100°C, de préférence entre 50 et 100°C,
   a1) déposer une composition (B) à l'aide de l'ensemble d'impression à jet d'encre en fonction de l'image chargée;
c) Chauffer le moule de préférence à une température comprise entre 70 et 300°C, de préférence entre 100 et 260°C;
d) Appliquer le textile sur la résine thermoplastique chauffée ;
e) Refroidir le moule ;
f) Démouler.

Dans un autre mode de réalisation, le procédé de l'invention comprend les étapes suivantes :
a) Fournir un moule ;
   i) Optionnellement faire un scan du moule puis traiter le signal obtenu pour donner une image ;
   ii) Charger l'image issue de l'étape i) ou une image dans un ensemble d'impression à jet d'encre ;
   a0) déposer une couche de composition (A0) en fond de moule ;
b) Optionnellement chauffer le moule de préférence à une température comprise entre 20 et 50°C et appliquer une composition (A1) comprenant au moins une résine thermoplastique;
   a1) chauffer le moule de préférence à une température comprise entre 20 et 100°C, de préférence entre 50 et 100°C et déposer la composition (B) à l'aide de l'ensemble d'impression à jet d'encre en fonction de l'image chargée;
   b1) Chauffer le moule de préférence à une température comprise entre 150 et 360°C, de préférence entre 180 et 260°C et appliquer une composition (A2) comprenant au moins une résine thermoplastique;
c) Chauffer le moule de préférence à une température comprise entre 70 et 300°C, de préférence entre 100 et 260°C;
d) Appliquer le textile sur la résine thermoplastique chauffée ;
e) Refroidir le moule ;
f) Démouler.

De préférence, dans le procédé de l'invention, la composition A1 est déposée de façon à obtenir de 200 à 2000 g/m2, de préférence de 400 à 700 g/m2.

De préférence, dans le procédé de l'invention, la composition A2 est déposée de façon à obtenir de 200 à 2000 g/m2, de préférence de 400 à 700 g/m2.

Un textile est un matériau susceptible d'être obtenu par tissage ou tricotage notamment de fils ou fibres notamment textiles. Un textile est donc un matériau qui peut se diviser en fibres ou en fils qui sont tissés ou tricotés les uns avec les autres. La présente invention concerne également des textiles dits non-tissés. Il y a donc lieu de distinguer les fibres ou fils textiles avec les textiles. Dans le cadre de la présente invention, le textile peut être tout type de textile naturel ou synthétique ou un mélange. Ainsi, le textile peut être un textile à base de polyester, de polyamide, de coton ou un mélange de ces éléments. Par exemple, on peut citer des textiles 100% polyester, 100% polyamide, 100% coton ou bien des textiles comprenant un mélange de coton et polyester, par exemple 50% coton et 50% polyester. Le textile selon l'invention peut également être un textile lumineux. Dans le cadre de la présente invention, on entend par textile lumineux :
- un article textile comprenant un élément lumineux tel que des diodes électroluminescentes (LED), des diodes électroluminescentes organiques (OLED), des fibres optiques, etc. Chacune des LED est reliée à un fil conducteur qui permet de les commander indépendamment ou par groupe permettant l'affichage d'un texte, logo, motif, etc.
- un tissu de fibres optiques obtenu par tissage, tricotage, tressage ou broderie. Les fibres optiques subissent d'abord un traitement mécanique (dégradation de la gaine de la fibre optique par abrasion, courbure au-delà du rayon de courbure, etc), thermique (traitement laser) ou chimique (traitement par solvant) pour les rendre capable de diffuser la lumière. Les tissus, notamment les tissus lumineux, peuvent être tissés pour avoir des motifs (tissage jacquard) ou bien former une nappe. De tels tissus lumineux sont notamment vendus par la société Brochier Technologies.

De manière avantageuse, le textile selon l'invention peut être enduit notamment d'une résine thermoplastique notamment telle que définie pour les compositions (A), (A1) et (A2), de préférence PVC.

Le textile de l'invention peut également être pré-enduit d'une colle.

L'étape d) peut être réalisée de toute manière connue de l'homme du métier, notamment par laminage (par exemple à l'aide d'un cylindre applicateur, par simple dépôt du textile sur le moule, etc), par pressage, etc.

Cette étape d) de contre-collage du textile est réalisée après l'étape de chauffage c) ou celle de c1) le cas échéant lorsque la composition est à l'état gélifié pour permettre l'adhérence.

De manière particulièrement avantageuse, dans le cadre du procédé de l'invention, le textile est appliqué directement sur la résine thermoplastique chauffée ce qui permet une adhésion directe sans avoir à utiliser de système d'accroche du textile ou de vide pour maintenir le textile en place dans le moule.

Dans le cas où un textile lumineux est mis en oeuvre, la composition (A) ne comprendra pas de pigments ou peu de pigments afin de laisser passer la lumière. Ainsi, la composition (A) comprend de 0 à 1% de pigment et de préférence de 0,01% à 0,5%.

L'étape de refroidissement e) peut être mise en oeuvre par pulvérisation d'eau ou d'air.

Le moule mis en oeuvre dans le cadre de la présente invention peut être tout type de moule permettant un chauffage progressif en présence d'une résine thermoplastique. De préférence, le moule est un moule à double-enveloppe avec circulation de fluide caloporteur.

Le moule peut être un moule 2D préalablement gravé par toute technique connue de l'homme du métier, par exemple par gravure chimique, laser, usinage, etc. De façon particulièrement avantageuse, le procédé de l'invention permet d'adapter la profondeur des motifs gravés au rendu désiré. Ainsi, il est possible d'obtenir des profondeurs allant jusqu'à environ 0,5 mm par exemple. Le motif gravé peut être en positif et/ou en négatif.

Le moule peut également être un moule 3D.

Le moule peut par exemple est un moule réalisé par électrodéposition de nickel, soit un moule en acier gravé puis revêtu d'une couche de nickel, le moule peut être un moule en acier, ou encore un moule à base de silicone ou tout autre polymère résistant à la température, notamment à une température au moins égale à la plus haute des températures de gélification des compositions (A0), (A), (A1), (A2) et (B).

Le procédé de l'invention permet avantageusement d'obtenir des pièces composites moulées comprenant des motifs de profondeur variable, éventuellement coloré et pouvant comprendre des motifs positifs et/ou négatifs. Ces pièces composites peuvent de façon avantageuse imiter le cuir. Ces pièces composites peuvent, de façon avantageuse, être destinées à la fabrication d'article de maroquinerie, par exemple sac à main, sac de voyage , d'articles d'ameublement publics et privés tels que les canapés, les fauteuils, d'articles pour le revêtement de siège notamment dans le cadre automobile, aéronautique, nautique et ferroviaire dans le domaine de l'automobile ces pièces composites peuvent être destinées à la fabrication d'appuie têtes, de levier de vitesse, d'accoudoir, de panneau de porte, de revêtement de planche de bord et de pièces d'ébénisterie. De manière particulièrement avantageuse, le procédé de l'invention permet d'obtenir des piècs composites utiles notamment pour :
- le gainage de pièces automobile : pour ce type de produit, des textiles 100 % polyester ou polyamide sont utilisés. Les allongements sous 5 daN doivent être supérieurs à 25% pour que le produit puisse être utilisé dans un process de gainage ;
- la réalisation de produits de maroquinerie. Les textiles utilisés sont de préférence des textiles constitués de 50% en poids de fibres polyester et 50% en poids de fibres de coton avec de très hautes performances mécaniques. Le textile confère au produit des propriétés mécaniques importantes comme la résistance à la rupture, la résistance à la déchirure et à la perforation.

La présente demande va maintenant être décrite à l'aide d'exemples non limitatifs.

### Exemple de mise en oeuvre du procédé selon l'invention

1) Sur l'ensemble de la surface d'un moule, une composition de vernis (A0) selon l'invention est pulvérisée à l'aide d'un pistolet. Le poids du dépôt de la composition de vernis est d'environ 10g/m2 +- 5g en matière sèche. Le moule est ensuite introduit dans un four chauffé à 340°C pendant 1 min et 30 sec (+- 10 sec) pour atteindre une température du moule comprise entre 20 et 100°C.
2) Une image est créée sur un logiciel ou scannée. La surface du moule est scannée de façon à placer l'image créée ou scannée exactement à l'endroit souhaité. La tête d'impression permet le dépôt de la composition (B) à l'endroit exact choisi pour imprimer l'image.
3) Une composition (A1) PVC selon l'invention est ensuite pulvérisée sur le moule obtenue en 2) à l'aide d'un pistolet. Le poids de dépôt de cette composition (A1) est d'environ 150g/m2+- 30 g/m2.
   Le moule est ensuite mis en chauffe pendant 5 min +- 30 sec à 340°C pour atteindre une température du moule comprise entre 150 et 360°C. Durant cette étape la composition (A1) est gélifiée.
4) Le moule obtenu à l'étape 3) est couplé à un bac à poudre comprenant la composition (A2) PVC selon l'invention sous forme de poudre. L'ensemble tourne durant un environ 30 secondes permettant d'obtenir une épaisseur du produit vinylique d'environ 0,6mm. Le moule est ensuite introduit de nouveau dans un four à 340°C pendant 1 minute pour réaliser l'opération de post-gélification et atteindre une température du moule comprise entre 70 et 300°C. Il s'agit d'une étape permettant de gélifier l'ensemble de la matière PVC.
5) A la fin de l'étape 4) un textile est appliqué directement à la sortie du four, une pression est appliquée pour obtenir un ancrage mécanique du tissu et ainsi avoir une bonne adhésion.
6) L'ensemble est ensuite refroidi soit par eau soit par air, et après démoulage une toile embossée débossée imprimée est obtenue.

### Exemple de mise en oeuvre du procédé selon l'invention.

1) Sur l'ensemble de la surface d'un moule, une composition de vernis (A0) selon l'invention est pulvérisée à l'aide d'un pistolet. Le poids du dépôt de la composition de vernis est d'environ 10g/m2 +- 5g en matière sèche. Le moule est ensuite introduit dans un four chauffé à 340°C pendant 1 min et 30 sec (+- 10 sec) pour atteindre une température du moule comprise entre 20 et 100°C.
2) Une image est créée sur un logiciel. La tête d'impression permet le dépôt de la composition (B) à l'endroit exact choisi pour imprimer l'image.
3) Une composition (A1) PVC selon l'invention est ensuite raclée sur le moule obtenue en 2) à l'aide d'une racle. Le poids de dépôt de cette composition (A1) est d'environ 650/m2+- 50 g/m2. Le moule est ensuite mis en chauffe pendant 5 min +- 30 sec à 340°C pour atteindre une température du moule comprise entre 150 et 360°C. Durant cette étape la composition (A1) va gélifier.
4) A la fin de l'étape 3) un textile est appliqué directement à la sortie du four, une pression est appliquée pour obtenir un ancrage mécanique du tissu et ainsi avoir une bonne adhésion.
5) L'ensemble est ensuite refroidi soit par eau soit par air, et après démoulage une toile embossée débossée imprimée est obtenue.

### Exemple de mise en oeuvre du procédé selon l'invention.

1) Sur l'ensemble de la surface d'un moule, une composition de vernis (A0) selon l'invention est pulvérisée à l'aide d'un pistolet. Le poids du dépôt de la composition de vernis est d'environ 10g/m2 +- 5g en matière sèche. Le moule est ensuite introduit dans un four chauffé à 340°C pendant 1 min et 30 sec (+- 10 sec) pour atteindre une température du moule comprise entre 20 et 100°C.
2) Une composition (A1) PVC selon l'invention est ensuite raclée sur le moule obtenue en 2) à l'aide d'une racle. Le poids de dépôt de cette composition (A1) est d'environ 650/m2+- 50 g/m2. Le moule est ensuite mis en chauffe pendant 1 min +- 30 sec à 340°C pour atteindre une température du moule comprise entre 50 et 150°C. Durant cette étape la composition (A1) est prégélifiée
3) Une image est créée sur un logiciel. La tête d'impression permet le dépôt de la composition (B) à l'endroit exact choisi pour imprimer l'image sur la composition A1 prégélifiée.
4) Le moule est ensuite remis en chauffe pendant 5 min +- 30 sec à 340°C pour atteindre une température du moule comprise entre 150 et 360°C. Durant cette étape la composition (A1) va gélifier.
5) A la fin de l'étape 4) un textile est appliqué directement à la sortie du four, une pression est appliquée pour obtenir un ancrage mécanique du tissu et ainsi avoir une bonne adhésion.
6) L'ensemble est ensuite refroidi soit par eau soit par air, et après démoulage une toile embossée débossée imprimée est obtenue.

## Revendications

1. Procédé de fabrication d'une pièce composite textile/résine thermoplastique comprenant les étapes suivantes:
a) Fournir un moule ;
a0) Appliquer une couche d'une composition de vernis (A0) en fond de moule;
b) Appliquer au moins une première composition (A, A1,A2), comprenant au moins une résine thermoplastique, sur la couche obtenue à l'étape précédente ;
c) Chauffer le moule obtenu à l'étape précédente ;
d) Appliquer un textile sur la résine thermoplastique chauffée ;
e) Refroidir le moule ;
f) Démouler,
ledit procédé comprenant en outre, après l'étape b) ou après l'étape a0), une étape a1) de dépôt sur toute ou partie de la surface de la couche issue de ladite étape b) ou a0) d'une seconde composition (B) colorée comprenant au moins une résine thermoplastique ou thermodurcissable.

2. Procédé selon la revendication 1, **caractérisé en ce que** la seconde composition (B) est déposée entre deux compositions premières (A,A1 ,A2).

3. Procédé selon la revendication 1 ou 2, **caractérisé en ce que** la première composition (A1 ,A2) comprend du PVC et un plastifiant.

4. Procédé selon la revendication 1 ou 2, **caractérisé en ce que** la première composition (A) comprend une résine choisie parmi : mélange de PVC et d'un polymère compatible choisi parmi les copolymères ou terpolymères chlorure de vinyle et acétate de vinyle (VC/VA) ou chlorure de vinyle et dérivé acrylique (VC/DA), les copolymères PVC/nitrile, les polyuréthanes mono- ou bi-composant, notamment les polyuréthanes thermoplastiques (TPU), les polyétheresters thermoplastiques, les copolymères éthylène/monomère vinyilique (EVA), les terpolymères éthylène/ monomère vinylique/carbonyle, les élastomères acryliques processables à l'état fondu, les copolymères à blocs polyamide et à blocs polyéther ou polyétherblockamides, les polyéthylènes chlorés ou chlorosulfonés, les polymères éthylène/ (méth) acrylate d'alkyle ou acide (méth) acrylique fonctionnalisés ou non, les polymères core-shell type MBS, les terpolymères bloc SBM, le PVDF et les résines polyamides.

5. Procédé selon l'une quelconque des revendications 1 à 4, comprenant en outre le fait de faire un scan du moule a) comprenant l'emplacement à imprimer, et de charger le scan dans un ensemble d'impression à jet d'encre.

6. Procédé selon la revendication 5, comprenant en outre le fait de, sur le moule en a),
i) faire un scan du moule, puis traiter le signal obtenu pour donner une image ;
ii) Charger l'image issue de l'étape i) ou une image dans un ensemble d'impression à jet d'encre ;
et en a1), déposer la seconde composition (B) à l'aide d'un ensemble d'impression à jet d'encre er fonction de l'image chargée.

7. Procédé selon la revendication 6, dans lequel, après l'étape a1), on chauffe le moule de l'étape a0) et l'on dépose la seconde composition (B) à l'aide de l'ensemble d'impression à jet d'encre en fonction de l'image chargée, sur la composition de vernis (A0).

8. Procédé selon la revendication 7, dans lequel on chauffe et dépose la seconde composition (B) à l'aide de l'ensemble d'impression à jet d'encre, en fonction de l'image chargée.

9. Procédé selon la revendication 8, **caractérisé en ce que** le moule est à une température comprise entre 20 et 100°C, de préférence entre 80 et 100°C, lors du dépôt de la seconde composition (B) à l'aide de l'ensemble d'impression à jet d'encre en fonction de l'image chargée.

10. Procédé selon l'une quelconque des revendications précédentes, **caractérisé en ce que** la composition de vernis (A0) comprend, en poids par rapport au poids de la composition :
- 5 à 20%, de préférence 10 à 15%, d'au moins une résine thermoplastique ou thermodurcissable dont les particules ont une taille comprise entre 0,1 et 10 µm, de préférence entre 0,1 et 5 µm;
- 5 à 20%, de préférence 10 à 15%, d'au moins un plastifiant, et
- 65 à 90%, de préférence 70 à 90%, d'au moins un solvant organique ou d'eau.

11. Procédé selon l'une quelconque des revendications 1 à 9, **caractérisé en ce que** la seconde composition (B) comprend, en poids par rapport au poids de la composition :
- 5 à 20%, de préférence 10 à 15%, d'au moins une résine thermoplastique ou thermodurcissable dont les particules ont une taille comprise entre 0,1 et 10 µm, de préférence entre 0,1 et 5 µm;
- 1 à 20%, de préférence 5 à 15%, d'au moins un agent colorant ;
- 5 à 20%, de préférence 10 à 15%, d'au moins un plastifiant, et
- 45 à 75%, de préférence 50 à 70%, d'au moins un solvant organique ou d'eau ;

12. Procédé selon l'une quelconque des revendications 1 à 9, **caractérisé en ce que** la première composition (A1) comprend :
- de 40 à 50% en poids, de préférence de 45 à 50% en poids, de résine thermoplastique ;
- de 25 à 40% en poids, de préférence de 30 à 40% en poids, de plastifiant ;
- de 5 à 10% en poids, de préférence de 8 à 10% en poids, de solvant ;
- de 0 à 5 % en poids, de préférence de 3 à 5 % en poids, de pigment ;
- de 0 à 3 % en poids, de préférence de 1 à 3 % en poids, d'additifs ;
- de 0 à 3 % en poids, de préférence de 1 à 3 % en poids, de charge ;
- de 0 à 5 % en poids, de préférence de 3 à 5% en poids, de stabilisant thermique ;

13. Procédé selon l'une quelconque des revendications 1 à 9, **caractérisé en ce que** la première composition (A2) comprend :
- de 45 à 55% en poids, de préférence de 50 à 55% en poids, de résine thermoplastique ;
- de 35 à 4 % en poids, de préférence de 40 à 45% en poids, de plastifiant ;
- de 0 à 3% en poids, de préférence de 1 à 3% en poids, de pigment ;
- de 0 à 3% en poids, de préférence de 1 à 3% en poids, d'additifs ;
- de 0 à 3% en poids, de préférence de 1 à 3% en poids, de charge ;
- de 0 à 3% en poids, de préférence de 1 à 3% en poids, de stabilisant thermique.

14. Procédé selon l'une quelconque des revendications précédentes, **caractérisé en ce que** le fond du moule comprend de motifs positifs et/ou négatifs, et la composition colorée est déposée sur les motifs gravés.

15. Procédé selon l'une quelconque des revendications 1 à 14, dans lequel le textile est un textile naturel ou synthétique ou un mélange éventuellement enduit d'une résine thermoplastique ou est un textile lumineux ou est un textile enduit de colle.

16. Procédé selon l'une quelconque des revendications 1 à 15, dans lequel le textile est déposé par laminage, par exemple à l'aide d'un cylindre applicateur, par simple dépôt du textile sur le moule, ou par pressage.

17. Procédé selon l'une quelconque des revendications 1 à 16, dans lequel le moule est un moule 2D préalablement gravé par exemple par gravure chimique, laser, usinage ou un moule 3D, de préférence un moule en acier, nickel ou silicone.

18. Procédé selon l'une quelconque des revendications 1 à 17, pour la fabrication d'article de maroquinerie, par exemple sac à main, sac de voyage, d'articles d'ameublement publics et privés tels que les canapés, les fauteuils, d'articles pour le revêtement de siège notamment dans le cadre automobile, aéronautique, nautique et ferroviaire, dans le domaine de l'automobile ces pièces composites peuvent être destinées à la fabrication d'appuie têtes, de levier de vitesse, d'accoudoir, de panneau de porte, de revêtement de planche de bord et de pièces d'ébénisterie.

## Patentansprüche

1. - Verfahren zur Herstellung eines Verbundteils aus Textilien und thermoplastischem Harz, umfassend die folgenden Schritte:
a) Bereitstellen einer Form;
a0) Aufbringen einer Schicht einer Lackzusammensetzung (A0) auf den Boden der Form;
b) Aufbringen mindestens einer ersten Zusammensetzung (A, A1, A2), umfassend mindestens ein thermoplastisches Harz, auf die im vorherigen Schritt erlangte Schicht;
c) Erhitzen der im vorherigen Schritt erlangten Form;
d) Aufbringen eines Textils auf das erhitzte thermoplastische Harz;
e) Abkühlen der Form;
f) Entformen,
das Verfahren ferner umfassend nach Schritt b) oder nach Schritt a0) einen Schritt a1) zum Aufbringen auf die gesamte oder einen Teil der Oberfläche der aus Schritt b) oder a0) hervorgegangenen Schicht einer zweiten gefärbten Zusammensetzung (B), umfassend mindestens ein thermoplastisches oder wärmehärtendes Harz.

2. Verfahren nach Anspruch 1, **dadurch gekennzeichnet, dass** die zweite Zusammensetzung (B)
zwischen zwei ersten Zusammensetzungen (A, A1, A2) aufgebracht wird.

3. Verfahren nach Anspruch 1 oder 2, **dadurch gekennzeichnet, dass** die erste Zusammensetzung (A1, A2)
PVC und einen Weichmacher umfasst.

4. Verfahren nach Anspruch 1 oder 2, **dadurch gekennzeichnet, dass** die erste Zusammensetzung (A)
ein Harz umfasst, das ausgewählt ist aus: einem Gemisch aus PVC und einem kompatiblen Polymer, ausgewählt aus Copolymeren oder Terpolymeren aus Vinylchlorid und Vinylacetat (VC/VA) oder Vinylchlorid und Acrylderivat (VC/DA), PVC/Nitril-Copolymeren, ein- oder zweikomponentigen Polyurethanen, insbesondere thermoplastischen Polyurethanen (TPU), thermoplastischen Polyetherestern, Ethylen/Vinylmonomer-Copolymeren (EVA), Ethylen/Vinylmonomer/Carbonyl-Terpolymeren, in der Schmelze verarbeitbaren Acrylelastomeren, Polyamid-Blockcopolymere und Polyether- oder Polyetherblockamid-Blockcopolymeren, chlorierten oder chlorsulfonierten Polyethylene, funktionalisierten oder nicht funktionalisierten Ethylen/Alkyl(meth)acrylat- oder (meth)acrylsäure-Polymeren, Core-Shell-Polymeren vom Typ MBS, SBM-Blockterpolymeren, PVDF und Polyamidharzen.

5. Verfahren nach einem der Ansprüche 1 bis 4, ferner umfassend ein Erstellen eines Scans der Form a), umfassend die zu druckende Stelle, und Laden des Scans in eine Tintenstrahldruckeinheit.

6. Verfahren nach Anspruch 5, ferner umfassend bei der Form in a)
i) Erstellen eines Scans der Form und dann Verarbeiten des erlangten Signals, um ein Bild zu ergeben;
ii) Laden des Bilds aus Schritt i) oder eines Bilds in eine Tintenstrahldruckeinheit;
und in a1) Aufbringen der zweiten Zusammensetzung (B) mittels einer Tintenstrahldruckeinheit entsprechend dem geladenen Bild.

7. Verfahren nach Anspruch 6, wobei nach Schritt a1) die Form von
Schritt a0) erhitzt wird und die zweite Zusammensetzung (B) mittels der Tintenstrahldruckeinheit
abhängig von dem geladenen Bild auf die Lackzusammensetzung (A0) aufgebracht wird.

8. Verfahren nach Anspruch 7, wobei die zweite Zusammensetzung (B) mittels der Tintenstrahldruckeinheit abhängig von dem geladenen Bild erhitzt und aufgebracht wird.

9. Verfahren nach Anspruch 8, **dadurch gekennzeichnet, dass** die Form beim Aufbringen der zweiten Zusammensetzung (B) mittels der Tintenstrahldruckeinheit abhängig von dem geladenen Bild eine Temperatur zwischen 20 und 100 °C, vorzugsweise zwischen 80 und 100 °C, aufweist.

10. Verfahren nach einem der vorherigen Ansprüche, **dadurch gekennzeichnet, dass** die Lackzusammensetzung (A0) bezogen auf das Gewicht der Zusammensetzung, in Gewichtsprozent Folgendes umfasst:
- 5 bis 20 %, vorzugsweise 10 bis 15 %, mindestens eines thermoplastischen oder wärmehärtenden Harzes, dessen Teilchen eine Größe zwischen 0,1 und 10 µm, vorzugsweise zwischen 0,1 und 5 µm, aufweisen;
- 5 bis 20 %, vorzugsweise 10 bis 15 %, mindestens eines Weichmachers und
- 65 bis 90 %, vorzugsweise 70 bis 90 %, mindestens eines organischen Lösungsmittels oder Wasser.

11. Verfahren nach einem der Ansprüche 1 bis 9, **dadurch gekennzeichnet, dass** die zweite Zusammensetzung (B) in Gewichtsprozent, bezogen auf das Gewicht der Zusammensetzung, Folgendes umfasst:
- 5 bis 20 %, vorzugsweise 10 bis 15 %, mindestens eines thermoplastischen oder wärmehärtenden Harzes, dessen Teilchen eine Größe zwischen 0,1 und 10 µm, vorzugsweise zwischen 0,1 und 5 µm, aufweisen;
- 1 bis 20 %, vorzugsweise 5 bis 15 %, mindestens eines Farbstoffs;
- 5 bis 20 %, vorzugsweise 10 bis 15 %, mindestens eines Weichmachers und
- 45 bis 75 %, vorzugsweise 50 bis 70 %, mindestens eines organischen Lösungsmittels oder Wasser.

12. Verfahren nach einem der Ansprüche 1 bis 9, **dadurch gekennzeichnet, dass** die erste Zusammensetzung (A1) Folgendes umfasst:
- von 40 bis 50 Gewichtsprozent, vorzugsweise 45 bis 50 Gewichtsprozent, thermoplastisches Harz;
- von 25 bis 40 Gewichtsprozent, vorzugsweise von 30 bis 40 Gewichtsprozent, Weichmacher;
- von 5 bis 10 Gewichtsprozent, vorzugsweise von 8 bis 10 Gewichtsprozent, Lösungsmittel;
- von 0 bis 5 Gewichtsprozent, vorzugsweise von 3 bis 5 Gewichtsprozent, Pigment;
- von 0 bis 3 Gewichtsprozent, vorzugsweise von 1 bis 3 Gewichtsprozent, Additive;
- von 0 bis 3 Gewichtsprozent, vorzugsweise von 1 bis 3 Gewichtsprozent, Füllstoff;
- von 0 bis 5 Gewichtsprozent, vorzugsweise 3 bis 5 Gewichtsprozent, Wärmestabilisator;

13. Verfahren nach einem der Ansprüche 1 bis 9, **dadurch gekennzeichnet, dass** die erste Zusammensetzung (A2) Folgendes umfasst:
- von 45 bis 55 Gewichtsprozent, vorzugsweise 50 bis 55 Gewichtsprozent, thermoplastisches Harz;
- von 35 bis 4 Gewichtsprozent, vorzugsweise von 40 bis 45 Gewichtsprozent, Weichmacher;
- von 0 bis 3 Gewichtsprozent, vorzugsweise von 1 bis 3 Gewichtsprozent, Pigment;
- von 0 bis 3 Gewichtsprozent, vorzugsweise von 1 bis 3 Gewichtsprozent, Additive;
- von 0 bis 3 Gewichtsprozent, vorzugsweise von 1 bis 3 Gewichtsprozent, Füllstoff;
- von 0 bis 3 Gewichtsprozent, vorzugsweise 1 bis 3 Gewichtsprozent, Wärmestabilisator;

14. Verfahren nach einem der vorherigen Ansprüche, **dadurch gekennzeichnet, dass** der Boden der Form positive und/oder negative Muster umfasst und die farbige Zusammensetzung auf die eingeätzten Muster aufgebracht wird.

15. Verfahren nach einem der Ansprüche 1 bis 14, wobei das Textil ein natürliches oder synthetisches Textil oder ein Gemisch ist, das optional mit einem thermoplastischen Harz beschichtet ist, oder ein leuchtendes Textil ist oder ein mit Klebstoff beschichtetes Textil ist.

16. Verfahren nach einem der Ansprüche 1 bis 15, wobei das Textil durch Laminieren, z. B. mittels einer Auftragswalze, durch einfaches Ablegen des Textils auf der Form oder durch Pressen aufgebracht wird.

17. Verfahren nach einem der Ansprüche 1 bis 16, wobei die Form eine zuvor gravierte 2D-Form ist, beispielsweise durch chemisches Ätzen, Lasergravur, maschinelles Bearbeiten, oder eine 3D-Form, vorzugsweise eine Form aus Stahl, Nickel oder Silikon.

18. Verfahren nach einem der Ansprüche 1 bis 17 zur Herstellung von Lederwaren, beispielsweise Handtaschen, Reisetaschen, öffentlichen und privaten Einrichtungsgegenständen, wie beispielsweise Sofas, Sesseln, Gegenständen für Sitzbezug insbesondere im Automobilbereich, Luftfahrt, Schifffahrt und Eisenbahn, im Automobilbereich können diese Verbundteile für die Herstellung von Kopfstützen, Schalthebeln, Armlehnen, Türverkleidungen, Armaturenbrettverkleidungen und Tischlereiteilen bestimmt sein.

## Claims

1. Method for manufacturing a composite part comprising a textile and a thermoplastic resin comprising the following steps:
a) providing a mold ;
a0) applying a layer of a varnish composition (A0) at the bottom of the mold,
b) applying at least a first composition (A, A1, A2), comprising at least one thermoplastic resin, on the layer obtained in the previous step;
c) heating the mold obtained in the previous step,
d) applying a textile to the heated thermoplastic resin;
e) cooling the mold;
f) removing the mold,
wherein the method further comprises after step b), or after step a0), a step a1) of applying a second composition (B) which is a colored composition and comprises at least one thermoplastic or thermosetting resin, on all or part of the surface of the layer obtained in step b) or a0).

2. Method according to claim 1, **characterized in that** the second composition (B) is applied between two first compositions (A, A1, A2).

3. Method according to claim 1 or 2, **characterized in that** the first composition (A1, A2) comprises PVC and a plasticizer.

4. Method according to claim 1 or 2, **characterized in that** the first composition (A) comprises a resin chosen from: mixture of PVC and a compatible polymer chosen from copolymers or terpolymers vinyl chloride and vinyl acetate (VC/VA) or vinyl chloride and acrylic derivative (VC/AD), PVC/nitrile copolymers, mono- or bicomponent polyurethanes, especially thermoplastic polyurethanes (TPU), thermoplastic polyetheresters, ethylene/vinyl monomer (EVA) copolymers, ethylene/vinyl monomer/carbonyl terpolymers, melt-processable acrylic elastomers, polyamide and polyether block copolymers or polyetherblockamides, chlorinated or chlorosulfonated polyethylenes, ethylene/alkyl (meth) acrylate polymers or (meth) acrylic acid functionalized or not, MBS core-shell polymers, SBM block terpolymers, PVDF and polyamide resins.

5. Method according to any one of claims 1 to 4, further comprising making a scan of the mold a) comprising the location to be printed, and loading the scan in an inkjet printing assembly.

6. Method according to claim 5, further comprising for the mold in a) the fact of:
i) making a scan of the mold and then process the signal obtained to give an image;
ii) loading the image from step i) or an image in an inkjet printing assembly;
and in a1), applying the second composition (B) with the aid of an inkjet printing assembly according to the loaded image.

7. Method according to claim 6, wherein, after step a1), one proceed to heating the mold of step a0) and applying the second composition (B) onto the varnish composition (A0) with the aid of the inkjet printing assembly according to the loaded image.

8. Method according to claim 7, wherein one proceed to heating and applying the second composition (B) with the aid of the inkjet printing assembly according to the loaded image.

9. Method according to claim 8, **characterized in that** the mold is at a temperature between 20 and 100°C, preferably between 80 and 100°C, when applying the second composition (B) using the inkjet printing assembly as a function of the loaded image.

10. Method according to any one of the preceding claims, **characterized in that** the varnish composition (A0) comprises, by weight relative to the weight of the composition:
- 5 to 20%, preferably 10 to 15%, of at least one thermoplastic or thermosetting resin whose particles have a size between 0.1 and 10 µm, preferably between 0.1 and 5 µm,
- 5 to 20%, preferably 10 to 15%, of at least one plasticizer, and
- 65 to 90%, preferably 70 to 90%, of at least one organic solvent or water.

11. Method according to any one of claims 1 to 9, **characterized in that** the second composition (B) comprises, by weight relative to the weight of the composition:
- 5 to 20%, preferably 10 to 15%, of at least one thermoplastic or thermosetting resin whose particles have a size between 0.1 and 10 µm, preferably between 0.1 and 5 µm,
- 1 to 20%, preferably 5 to 15%, of at least one coloring agent,
- 5 to 20%, preferably 10 to 15%, of at least one plasticizer, and
- 45 to 75%, preferably 50 to 70%, of at least one organic solvent or water.

12. Method according to any one of claims 1 to 9, **characterized in that** the first composition (A) comprises :
- from 40 to 50% by weight, preferably from 45 to 50% by weight, of thermoplastic resin;
- from 25 to 40% by weight, preferably from 30 to 40% by weight, of plasticizer;
- from 5 to 10% by weight, preferably from 8 to 10% by weight, of solvent;
- from 0 to 5% by weight, preferably from 3 to 15% by weight, of pigment;
- from 0 to 3% by weight, preferably from 1 to 3% by weight, of additives;
- from 0 to 3% by weight, preferably from 1 to 3% by weight, of filler;
- from 0 to 5% by weight, preferably from 3 to 5% by weight, of thermal stabilizer.

13. Method according to any one of claims 1 to 9, **characterized in that** the first composition (A2) comprises:
- from 45 to 55% by weight, preferably from 50 to 55% by weight, of thermoplastic resin;
- from 35 to 45% by weight, preferably from 40 to 45% by weight, of plasticizer;
- from 0 to 3% by weight, preferably from 1 to 3% by weight, of pigment;
- from 0 to 3% by weight, preferably from 1 to 3% by weight, of additives;
- from 0 to 3% by weight, preferably from 1 to 3% by weight, of filler;
- from 0 to 3% by weight, preferably from 1 to 3% by weight, of thermal stabilizer.

14. Method according to any one of the preceding claims, **characterized in that** the mold bottom comprises positive and/or negative patterns and the colored composition is applied on the etched patterns.

15. Method according to any one of claims 1 to 14, wherein the textile is a natural or synthetic textile or a mixture optionally coated with a thermoplastic resin or is a luminous textile or is a textile coated with glue.

16. Method according to any one of claims 1 to 15, wherein the textile is deposited by rolling, for example with the aid of an applicator roll, by simply depositing the textile on the mold, or by pressing.

17. Method according to any one of claims 1 to 16, wherein the mold is a 2D mold previously etched for example by chemical etching, laser etching, machining etching, or a 3D mold, preferably a steel, nickel or silicone mold.

18. Method according to any one of claims 1 to 17, for the manufacture of leather goods, for example purses, travel bags, public and private furnishings such as sofas, armchairs, of articles for the covering of a seat, particularly in the automobile, aeronautical, nautical and railway sectors, in the automotive field, these composite parts may be intended for the manufacture of headrests, gearshift, armrest, door panel, dashboard liner and cabinetry parts.
